# EUROPEAN PATENT APPLICATION

(11) **EP 1 522 825 A2**
(43) Date of publication of application: **13.04.2005**
(21) Application number: 04255831.2
(22) Date of filing: 24.09.2004
(51) Int. Cl.: G01D 5/20, G01P 3/488

(54) **Probe with transformator coupling**

(30) Priority: 08.10.2003 GB 0323573
(71) Applicant: WESTON AEROSPACE LIMITED, Farnborough, Hants GU14 7PW (GB)
(72) Inventor: Proctor, Kenneth W., c/o Weston Aerospace Limited, Farnborough Hants GU14 7PW (GB)
(74) Representative: Vleck, Jan Montagu

(57) **Abstract**

A transformer probe (1) for sensing movement of a body (13) of magnetic material, comprising a probe piece (3), a primary coil (2) inductively coupled to the pole piece (3), and a transformer secondary coil (7) inductively coupled to the primary coil (2). The transformer secondary coil (7) is a conductor (5) wound around a core 96) with the wound conductor (5) and core (6) forming a combined secondary transformer coil and transformer core wound around the primary coil (2).

## Description

This invention relates to a probe and in particular to a probe for detecting movement, speed or torque of magnetic objects.

The use of magnetic sensors in co-operation with, for example, one or more projections on a shaft to give an output from which shaft rotational speed or torque may be determined is well known. In such sensors, a voltage induced in a coil by changes in the magnetic flux pattern of a magnetically energised pole piece, which are caused by movement of a body of magnetic material in the field from the pole piece, is detected and/or measured.

The rotational speed of a rotating element can be determined by measuring the frequency of the periodic signal produced in the coil as one or more markers or elements on the surface of the rotating element passes or pass through the field from the pole piece.

The torque transmitted by a rotating shaft can be measured, for example, by fixing a tubular structure around the shaft whose twist is to be measured, such that one end of the tubular structure is fixed to the shaft while the other end is loose. By measuring the relative time delay between the passing of a marker or element on the surface of the shaft and a corresponding one on the loose end of the tubular structure, the relative angular displacement between the rotating shaft and the tubular structure at the loose end can be measured from which the torque can then be determined.

US-A-3,876,927 describes a magnetic pickup sensor with a limited output signal amplitude and reduced susceptibility to interference from stray fields.

EP-A-169 670 and US-A-4,739,260 describe probes for detecting movement of magnetic objects in which one end of a closed loop electrical circuit formed from an electrical conductor is wound around a pole piece such that movement of a magnetic body through a first flux pattern generated by the pole piece induces a current in the conductor which generates a second flux pattern at a second end of the closed loop, remote from the first end, which forms a primary coil of a transformer. The primary coil is inductively coupled to a multi-turn secondary coil terminated at an output pair connected to detecting apparatus. When resistance of the closed loop electrical circuit is low, a magnetic object passing in the vicinity of pole piece induces a low voltage, high current signal in the primary coil that is transformed into a high output voltage at the output pair of the secondary coil.

A problem associated with the proximity sensors of US-A-3,876,927, EP-A-169,670 and US-A-4,739,260 described above is the space required for the transformer core and output coil. The transformer tends to be bulky and the sensor therefore requires headroom to accommodate it. A secondary or output transformer coil having many turns is required to produce an output voltage of a reasonable level. This means that such sensors may be too large for certain locations.

Although the probes of EP-A-169 670 and US-A-4,736,260 have a smaller footprint at their sensing end than the previously used speed or movement probes, they are still reasonably bulky and rigid devices. This is particularly true of their output ends which include the multi-turn secondary coil wound around a torroidal core.

The present invention provides a probe as defined in claims 1 and 8 to which reference should now be made. The probe of claim 1 can be made significantly smaller and/or more flexible than the known movement or speed probes. Preferred features of the invention are defined in the dependent claims.
- Figure 1: illustrates a speed or torque sensor embodying the present invention;
- Figure 2: illustrates a detail of the probe of figure 1;
- Figure 3: illustrates the magnetic field around a straight current carrying wire; and
- Figure 4: is a schematic exploded illustration of the magnetic field around the primary turn and core of figure 2 with the secondary coil not shown.

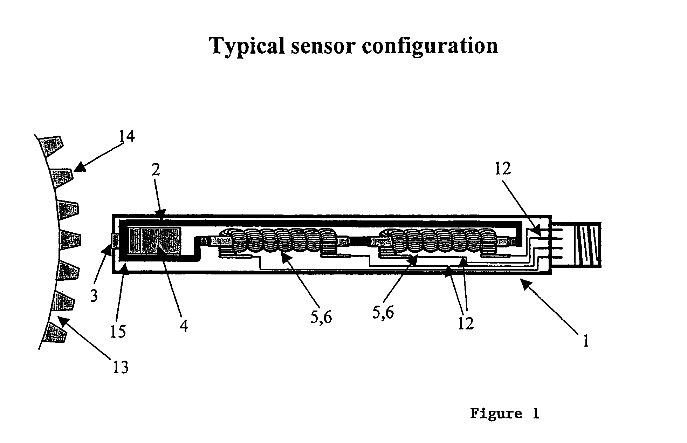

Referring to figure 1, a single turn electrical circuit (a primary coil 2) is formed by a loop of electrically conductive material. A first end of the loop passes around the pole piece 3 of a magnet 4 mounted at the front end of the housing 12. Towards the other end of the loop, two combined secondary windings 5 and transformer cores 6 are wound around and on the primary loop or coil 2. Each output or secondary coil 5 terminates in or is connected to output leads 12 or terminals which are connected to measuring apparatus (not shown). The secondary or output windings 5 are each connected by a pair of wires 65 to a load resistance and measuring apparatus which for simplicity have been omitted from the figures. In a preferred embodiment of the invention the load resistance is typically 1-20 kΩ.

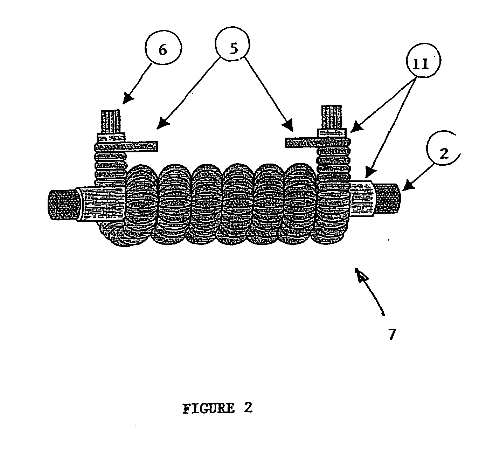

The transformer probe 1 shown in Figures 1 and 2 has a cylindrical housing 12 containing a primary closed loop circuit 2 of electrically conductive material. The primary circuit may be formed from copper wire, preferably with a diameter of 1-2 mm, or from any other conductor with low resistivity such as, for example, steel or bronze.

The primary circuit preferably has a low DC resistance so as to have a low impedance in comparison to that of the primary coil. For low frequency operation, f, where the primary circuit resistance is R and the primary coil inductance is L, R<<2πfL. The inductance of the primary coil is likely to be in the range of 1-2 µH and so the resistance of the conducting primary circuit is typically 1-20 mΩ.

As shown in figure 2, a transformer 7 is formed by the primary conductor coil or winding 2 around which is wound a magnetic wire 6. The magnetic wire (which may be an iron laminate) forms the transformer core 6. A transformer secondary or output coil 5 is itself wound around the transformer core. It can be convenient to consider the transformer 7 as comprising a combined transformer core and secondary coil which is wound around the primary turn 2. The combined transformer core 6 and secondary coils can each be considered to be a Rogowski coil.

The transformer cores 6 are each formed from a soft (i.e. not permanently magnetised) magnetic material wire, solid or consisting of several wires twisted together having a diameter in the range 0.5 mm to 3 mm. Any soft magnetic material which could be easily coiled can be used e.g. iron, nickel and iron, nickel and/or chrome alloys.

The secondary coil or windings 5 may be formed from a small diameter conductor such as copper or aluminium. A conductor of 0.05 to 0.2 mm diameter is appropriate.

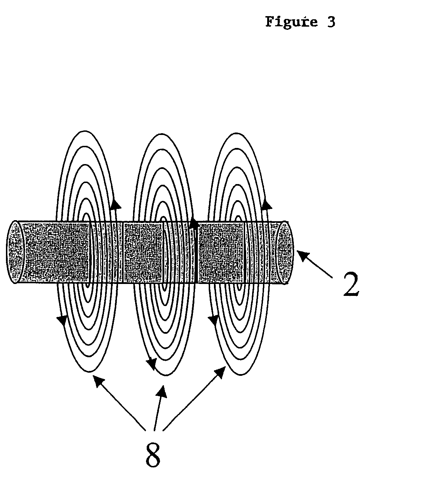

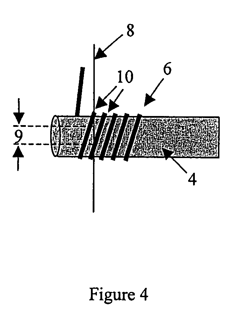

When current passes through the single primary turn or wire 2, the generated magnetic field can be considered to be represented by a series of closed circular magnetic flux lines 8 having the primary turn 2 at their centre (see figure 3). The function of the magnetic transformer core 6 is to provide a low magnetic reluctance path conduit for magnetic flux. The ideal transformer core from the point of view of effective transformation would be a closed circular conduit of torroidal shape (as used in the known designs), matching a magnetic flux line 8. However in the proposed design, the turns of the transformer core 2, of figure 2 form a spiral and do not form closed circular conduits. The magnetic flux must therefore jump or pass through gaps 9 between successive turns 10 of the spiral core 6 (see figure 4). These air gaps 9 reduce the magnetic flux in the core and therefore the effectiveness of the transformer.

The size of the air gap or gaps for magnetic flux between the transformer core turns depends on the separation and/or spacing between adjacent core turns or spirals. This is the sum of any separation between adjacent portions of secondary winding and depends on the diameter of the conductor forming the secondary winding (and any insulation 11 between the core and secondary winding) as this must be accommodated between successive turns of the transformer core (see figure 2). The conductor for the secondary windings 5 should therefore have as small a diameter as is appropriate (to provide the necessary strength and resistance to breakage) and the combined secondary coil and core should be wound as tightly as possible.

Electrical insulation 11 may be placed around the primary conductor to insulate the primary conductor 2 from the combined secondary conductor and transformer core and/or placed around the secondary conductor to insulate the secondary conductor from the core onto which it is wound.

A possible transformer probe construction includes a primary loop 2 or coil formed from a good conductor such as copper, aluminium, steel or bronze and having a round, tubular, flat or square shape with a cross sectional area of 0.5 to 2mm². The transformer core 6 could then be a wire having a diameter in the range 0.5 to 3 mm and being made of a soft magnetic material such as iron, nickel and iron, nickel and/or chrome alloys. The secondary coil 4 has a diameter in the range of 0.05 to 0.2 mm and is also made of a good conductor such as copper, aluminium steel or bronze.

Transformers of the type described above can be manufactured as follows. First a short piece of magnetic wire (3) is straightened and its surface insulated with a tape or a sleeve (11). Next the secondary coil (5) is wound, typically in one or two layers over the required distance on the insulated magnetic wire. Next, a piece of wire (2) to be used for the primary coil is straightened and covered by an insulating tape or sleeve (11). Then the magnetic wire (3) with the secondary coil (5) on it is wound around the primary coil wire (2). The primary coil wire (2) is formed in the desired shape to form a closed electrical circuit.

Probes according to the present invention are particularly useful in environments where a small or elongated probes is required because of, for example, space restrictions. Probes according to the present invention can also be flexible as the coiled transformer core arrangement is flexible. Embodiments of the present invention can therefore be bent or otherwise manipulated for the probe to create the appropriate geometry for an available space.

## Claims

1. A transformer probe (1) for sensing movement of a body (3) of magnetic material comprising:
a magnetically energisable pole piece (3);
a primary closed loop electrical circuit (2) having a first
end which is inductively coupled to the pole piece (3), the arrangement being such that movement of a body of magnetic material relative to the pole piece (3) induces a current in the primary circuit (2), and a second end, remote from the pole piece, which forms a transformer primary coil;
a transformer secondary coil (5), inductively coupled to the primary coil (2), and terminated by a load resistance and means for measuring an output signal from the secondary coil (5), wherein the primary and secondary coils form a transformer (7) such that a current in the primary coil (2) induces a voltage across the secondary coil (5);
wherein the transformer secondary coil (5) is a conductor and the conductor is wound around a magnetic element (6), the magnetic element forming a transformer core and being itself wound around the transformer primary coil 92) formed by the second end of the primary closed loop electrical circuit, such that the secondary transformer coil and the magnetic element form a combined secondary transformer coil and transformer core element wound around the transformer primary coil (2).

2. A transformer probe according to claim 1 wherein the combined secondary transformer coil and transformer core element is flexible.

3. A transformer probe according to claims 1 and/or 2 wherein at least the primary coil formed by the second end of the primary electrical circuit is flexible.

4. A transformer according to any of claims 1 to 3 wherein the magnetic element is a wire of a soft magnetic material such as iron, nickel or chrome and/or alloys of iron, nickel and/or chrome or other similar materials

5. A transformer probe according to any of claims 1 to 4 wherein the magnetic element is a wire 0.5 to 3 mm in diameter.

6. A transformer probe according to any of claims 1 to 5 wherein the primary and/or secondary coils are formed from a wire of a good electrical conductor such as copper, aluminium steel and/or bronze.

7. A transformer probe according to any preceding claim wherein the secondary coil is formed from a wire 0.05 to 0.2 mm in diameter.
